# EUROPÄISCHE PATENTSCHRIFT

(11) **EP 3 000 302 B1**
(45) Veröffentlichungstag und Bekanntmachung des Hinweises auf die Patenterteilung: **14.08.2019**
(21) Anmeldenummer: 15174522.1
(22) Anmeldetag: 30.06.2015
(51) Int. Cl.: A01D 41/12

(54) **MÄHDRESCHER MIT EINER VERTEILVORRICHTUNG**
COMBINE HARVESTER WITH A DISTRIBUTION DEVICE
MOISSONNEUSE-BATTEUSE EQUIPÉE D'UN DISPOSITIF DE DISTRIBUTION

(30) Priorität: 25.09.2014 DE 102014113887
(43) Veröffentlichungstag der Anmeldung: 30.03.2016
(73) Patentinhaber: CLAAS Selbstfahrende Erntemaschinen GmbH, 33428 Harsewinkel (DE)
(72) Erfinder: Terörde, Stefan, 48231 Warendorf (DE); Vieregge, Christopher, 32694 Dörentrup (DE); Brinkmann, Jörn, 33428 Harsewinkel (DE); Heitmann, Christoph, 48231 Warendorf (DE)
(74) Vertreter: CLAAS Gruppe

(56) Entgegenhaltungen:
- EP-A1- 1 985 170
- EP-A1- 2 329 704
- EP-A2- 1 514 466
- WO-A1-02/34029

## Beschreibung

Die vorliegende Erfindung betrifft einen Mähdrescher gemäß dem Oberbegriff des Anspruches 1 sowie ein Verfahren zum Betreiben eines Mähdreschers gemäß dem Oberbegriff des Anspruches 12.

Aus der EP 2 329 704 A1 ist eine Verteilvorrichtung für einen Mähdrescher bekannt. Die Verteileinrichtung umfasst zwei rotierend antreibbare Verteileinheiten, die der Ausbringung von Nichtkornbestandteilen auf dem Boden eines abgeernteten Feldes dienen. Die Verteileinheiten sind im rückwärtigen Bereich des Mähdreschers unmittelbar nebeneinander angeordnet. Der jeweiligen Verteileinheit ist eine im Wesentlichen von dem Mähdrescher weg nach außen weisende, um eine vertikale Achse verstellbare Leitvorrichtung zugeordnet, welche von der jeweiligen Verteileinheit mit Nichtkornbestandteilen beschickt wird. Die Verteileinheiten geben die Nichtkornbestandteile unmittelbar auf den Feldboden sowie an die Leitvorrichtungen ab. Den Leitvorrichtungen kommt die Aufgabe zu, die gleichmäßige Verteilung der auszutragenden Nichtkornbestandteile über die gesamte Breite des Vorsatzgerätes zu unterstützen. Äußere, die Gleichmäßigkeit der Austragung beeinflussende Einflüsse, wie Seitenwind, sollen mit diesen Leitvorrichtungen kompensiert werden. Die Genauigkeit der Austragung der Nichtkornbestandteile auf dem Feldboden, das heißt das sich einstellende Streubild, wird unter anderem bestimmt durch die ausbringbare Menge in den Extrembereichen der Verteileinrichtung, das heißt am äußersten Rand, der durch das Auswerfen von Nichtkornbestandteilen mittels der Verteileinheiten erreichbar ist, sowie insbesondere in der Mitte zwischen den Verteileinheiten.

Aus der EP 1 570 726 A1 ist eine Verteileinrichtung bekannt, welche zwei gegenläufig rotierend antreibbare Verteileinheiten ohne in Umfangsrichtung der Verteileinheiten verstellbare Leitelemente umfasst. Die Verteileinheiten tragen, bezogen auf einen Verteilschwerpunkt, der bei einer angestrebten gleichmäßigen Verteilung über die Breite eines Vorsatzgerätes, mit der Längsachse des Mähdreschers zusammenfällt, Erntegut im Heckbereich des Mähdreschers auf den abgeernteten Boden aus. Der Verteilschwerpunkt kennzeichnet den Bereich der Überlappung des von den beiden Verteileinheiten ausgetragenen Erntegutstroms. Äußere Einflüsse wie Seitenwind oder Hangneigung werden durch eine Variation der Drehgeschwindigkeit der Verteileinheiten kompensiert. Dabei wirkt sich eine zunehmende Drehgeschwindigkeitsdifferenz auf die Lage des Verteilschwerpunkts aus. Mit zunehmender Differenz entfernt sich der Verteilschwerpunkt von der Längsachse des Mähdreschers. Dies führt jedoch automatisch auch zu einer stärkeren Materialanhäufung in dem Bereich um den Verteilschwerpunkt herum, da die Gleichmäßigkeit des Austrages in Folge der Geschwindigkeitsdifferenz zwischen den Verteileinheiten stark variiert.

Aus der EP 1 985 170 ist ein Mähdrescher gemäß dem Oberbegriff des Anspruches 1 bekannt.

Es ist die Aufgabe der vorliegenden Erfindung, einen Mähdrescher der eingangs genannten Art sowie ein Verfahren zum Betreiben eines Mähdreschers bereitzustellen, wodurch eine höhere Genauigkeit der Verteilung von Nichtkornbestandteilen und insbesondere eine möglichst gleichmäßige Verteilung über die Arbeitsbreite erzielbar ist.

Diese Aufgabe wird hinsichtlich des Mähdreschers durch die Merkmale des Anspruches 1 und hinsichtlich des Verfahrens durch die Merkmale des Anspruches 12 erreicht. Vorteilhafte Weiterbildungen sind Gegenstand der Unteransprüche.

Gemäß dem Anspruch 1 wird vorgeschlagen, dass die Verteileinheiten zumindest durch die Breite des Mähdreschers zueinander beabstandet sind, dass das zumindest eine Streublech der jeweiligen Verteileinheit mittels einer Steuerungsvorrichtung basierend auf einem Streukennfeld ansteuerbar ist, welches von der Steuerungsvorrichtung in Abhängigkeit von der Arbeitsbreite eines an den Mähdrescher angekoppelten Vorsatzgerätes und zumindest einem weiteren Parameter generierbar ist, so dass eine sich bis etwa über die halbe Breite des Mähdreschers erstreckbare Überlappung der Austragung im Bereich zwischen den Verteileinheiten einstellbar ist. Der gegenüber dem Stand der Technik vergrößerte Einstellbereich zwischen den Verteileinheiten, hat den Vorteil, dass das angestrebte Streubild in einem der ein stellbaren Überlappung entsprechenden Maß nach links oder rechts verschoben werden kann. Sollen die Nichtkornbestandteile, im Wesentlichen Stroh und Spreu, nicht bis unmittelbar an die Bestandskante ausgetragen werden, so ist dies mittels des erfindungsgemäßen Mähdreschers erreichbar. Ein weiterer Vorteil ergibt sich hinsichtlich der Verteilpräzision bei Kurvenfahrten während des Ernteprozesses, da die Mitte des Streubildes, welche im Stand der Technik mit der Längsachse des Mähdreschers zusammenfällt und mit dieser bei Kurvenfahrt wegen der Hinterradlenkung entsprechend ausgeschwenkt wird, auf Grund der großen einstellbaren Überlappung derart nachgeregelt werden kann, dass diese abweichend von der Längsachse nach links oder rechts verschiebbar ist, um dem Kurvenradius zu folgen.

Hierzu sollte das zumindest eine Streublech der jeweiligen Verteileinheit unabhängig von dem oder denen der anderen Verteileinheit einander einstellbar sein. Auf diese Weise kann genauer auf äußere Einflüsse wie Seitenwind oder Kurvenfahrten reagiert werden, um das angestrebte Streubild beizubehalten. Hierzu kann die jeweilige Verteileinheit durch die Steuerungsvorrichtung anhand eines individuellen Streukennfeldes angesteuert werden.

Vorteilhafterweise kann die Verteilung der von den Verteileinheiten ausgebrachten Nichtkornbestandteile asymmetrisch zur Längsachse des Mähdreschers einstellbar sein. Hierdurch lassen sich unterschiedliche Verteilbreiten der jeweiligen Verteileinheit darstellen. Ausgehend von der Längsachse des Mähdreschers hin zur Bestandskante beziehungsweise dem äußeren Ende des Vorsatzgerätes lassen sich voneinander abweichende Verteilbreiten der jeweiligen Verteileinheit einstellen. Dies kann der Fall sein, wenn die Bestandskante dem Feldrand entspricht und die verbleibende abzuerntende Bestandsbreite kleiner als die Breite des Vorsatzgerätes ist. Hierdurch kann ein Austragen über den Feldrand hinaus vermieden werden.

In vorteilhafter Weiterbildung kann die Verteilung der von den Verteileinheiten ausgebrachten Nichtkornbestandteile über die Breite des Vorsatzgerätes hinaus verschiebbar sein. Dies erlaubt eine Einstellung der Verteilbreite, mittels der Verhindert werden kann, dass Nichtkornbestandteile in den zur aktuellen Fahrspur benachbarten Bestand gelangen.

Insbesondere können zur Generierung eines Streukennfeldes durch die Steuerungsvorrichtung Signale eines Positionsbestimmungssystems verarbeitbar sein. Dies kann dazu dienen, eine bevorstehende Kurvenfahrt zu erkennen und die Verteileinheiten entsprechend nachzuregeln, um dem abzufahrenden Kurvenradius folgen zu können.

Ergänzend oder alternativ können zur Generierung eines Streukennfeldes durch die Steuerungsvorrichtung Signale zumindest eines an dem Mähdrescher angeordneten optischen Sensors verarbeitbar sein. So kann mittels des zumindest einen optischen Sensors, der im rückwärtigen Bereich des Mähdreschers angeordnet sein kann, das sich ergebende Streubild anhand der von dem optischen Sensor gelieferten Daten analysiert werden, um die Streukennfelder zur Ansteuerung der Verteileinheiten anzupassen. Ein optischer Sensor kann im Inneren des Mähdreschers auf Höhe des Abgabebereiches einer Abscheidevorrichtung angeordnet sein. Die Abscheidevorrichtung kann zumindest einen Axialrotor umfassen. Dieser optische Sensor kann der Erfassung eines von der Abscheidevorrichtung an die Verteileinrichtung abgegebenen Massenstromes an Nichtkornbestandteilen dienen. Insbesondere kann die Aufteilung des Massenstromes bei dessen Zuführung auf die beiden Verteileinheiten der Verteileinrichtung mittels einer Bilddatenauswertung durch die Steuerungsvorrichtung abgeschätzt werden. Die Aufteilung des Massenstromes kann der Generierung der Streukennfelder zu Grunde gelegt werden.

Alternativ oder zusätzlich können zur Generierung eines Streukennfeldes durch die Steuerungsvorrichtung Signale zumindest eines den Mähdrescher begleitenden optischen Sensors verarbeitbar sein. Beispielsweise kann der begleitende Sensor als eine Drohne ausgeführt sein, die beabstandet zu dem Mähdrescher diesem folgt, um das Streubild anhand von der Drohne bereitgestellten Bilddaten analysieren zu können. Alternativ kann die Drohne auch dem Mähdrescher in Fahrtrichtung vorauseilend Bilddaten bereitstellen, um auf sich im Vorfeld des Mähdreschers ändernde Erntebedingungen reagieren zu können.

Weiterhin kann zur Ansteuerung des zumindest einen Streubleches ein als Hydraulikzylinder ausgeführter Aktor vorgesehen sein. Der Aktor kann als oszillierend bewegter Linearantrieb ausgeführt sein. Der Linearantrieb kann als doppelt wirkender Hydraulikzylinder ausgebildet sein. Dieser Hydraulikzylinder wird über ein in diesen integriertes Wegeventil gesteuert und kann zum einen während seiner beiden Kolbenhübe mit unterschiedlichen Verfahrgeschwindigkeiten betrieben werden. Außerdem besteht die Möglichkeit, während des Betriebs der Einrichtung den Kolbenweg zu variieren, so dass sich die maximale Position der Streubleche verändert.

Hierzu kann zur Ansteuerung eines zweiten Streubleches eine Hebelanordnung vorgesehen sein, die mit der Aktorik zur Ansteuerung des ersten Streubleches gekoppelt ist. Hierzu kann das zweite Streublech durch eine Viergelenkkette vom Hydraulikzylinder angetrieben werden.

Vorzugsweise kann die Steuerungsvorrichtung dazu eingerichtet sein, anhand von Erntegutparameter und/oder Betriebsparametern des Mähdreschers einen der jeweiligen Verteileinheit zugeführte Masse an Nichtkornbestandteilen zu bestimmen. Eine maßgebliche Rolle kann dabei die Übergabe der Nichtkornbestandteile von einer Abscheidevorrichtung des Mähdreschers, wie einer Anordnung von Hordenschüttlern oder einer nach dem Axialflussprinzip arbeitenden Abscheideeinrichtung, an eine Häckselvorrichtung spielen, da während der Übergabe die massenmäßige Aufteilung vor der anschließenden Zuführung an die Verteileinheiten weitgehend vorbestimmt wird. So könnte die Aufteilung des Massenstromes an Nichtkornbestandteilen, der von der Abscheidevorrichtung beiderseits der Längsachse des Mähdreschers abgegeben wird, als Betriebsparameter mittels einer optischen Sensorik erfasst und mittels einer entsprechenden Bilddatenauswertung abgeschätzt werden.

Dabei kann die Steuerungsvorrichtung dazu eingerichtet sein, die Verteileinheiten in Abhängigkeit von der abgeschätzten Masse anzusteuern. Hierzu können die Verteileinheiten auf ein Flächenverhältnis eingestellt werden, wodurch sich eine gleichmäßigere Massenverteilung pro Flächeneinheit erreichen lässt. Im Idealfall kann von einer annähernd gleichmäßigen Aufteilung der zugeführten Masse an Nichtkornbestandteilen ausgegangen werden, so dass im Wesentlichen die Erntegutparameter, wie Feuchtigkeit, Häcksellänge, Erntegutart oder dergleichen für die Einstellung der Verteileinheiten maßgeblich sind. Eine quantitative Abweichung des der jeweiligen Verteileinheit zugeführten Massenstromes in Folge beispielsweise einer Querneigung des Mähdreschers oder auf Grund starker Inhomogenitäten im abzuerntenden Bestand ließen sich entsprechend ausgleichen.

Gemäß dem Anspruch 12 wird ein Verfahren zum Betreiben eines Mähdrescher mit einer Verteilvorrichtung zur Ausbringung von Nichtkornbestandteilen auf einem Feld, die zumindest zwei aktiv antreibbare rotierende Verteileinheiten umfasst, die zueinander beabstandet am Heck des Mähdreschers angeordnet sind, die jeweils ein die jeweilige Verteileinheit in Umfangsrichtung abschnittsweise umgebendes Gehäuse umfassen, welches eine Eintrittsöffnung und eine Austrittsöffnung aufweist, sowie jeweils zumindest ein Streublech, das um eine vertikale Achse in Umfangsrichtung der Verteileinheit geschwenkt wird, um die Öffnungsweite der Austrittsöffnung zu variieren, vorgeschlagen, das dadurch gekennzeichnet ist, dass das zumindest eine Streublech der jeweiligen zumindest durch die Breite des Mähdreschers zueinander beabstandeten Verteileinheiten mittels einer Steuerungsvorrichtung basierend auf einem Streukennfeld, welches von der Steuerungsvorrichtung in Abhängigkeit von der Arbeitsbreite eines an den Mähdrescher angekoppelten Vorsatzgerätes und zumindest einem weiteren Parameter generiert wird, und einem vorgebbaren Verhältnis von auszubringender Masse an Nichtkornbestandteilen pro Flächeneinheit angesteuert wird. So kann bei einer Vorgabe für ein einzuhaltendes Flächenverhältnis ein auftretendes Ungleichgewicht bei der Zufuhr der Nichtkornbestandteile zur jeweiligen Verteileinheit auf Grund von beispielsweise Querneigung des Mähdreschers oder starken Inhomogenität im abzuerntenden Bestand auf dem Feld zumindest kompensiert oder vollständig ausgeglichen werden. Dies erfolgt dadurch, dass ein Versatz der Verteilbreite bezüglich der Längsachse des Mähdreschers einstellbar ist, der je Verteileinheit etwa der halben Breite des Mähdreschers entspricht. Das vorgebare Flächenverhältnis, welches von der einen Verteileinheit auf Grund des kleineren zugeführten Massenstromes nicht einhaltbar ist, wird durch die Verteileinheit, der ein größerer Massenstrom zugeführt wird, kompensiert, indem die Verteilbreite bis etwa zur halben Breite des Mähdreschers auf den Verteilbereich der anderen Verteileinheit durch eine entsprechende Ansteuerung ausgedehnt wird, während die Verteilbreite der Verteileinheit, der ein kleinerer Massenstrom zugeführt wird, entsprechend reduziert wird.

Vorteilhafterweise kann die der jeweiligen Verteileinheit zugeführte Masse an Nichtkornbestandteilen bestimmt werden.

Hierzu kann die zugeführte Masse an Nichtkornbestandteilen anhand von Erntegut- und/oder Betriebsparametern bestimmt werden.

Insbesondere kann die jeweilige Verteileinheit derart von der Steuerungsvorrichtung angesteuert werden, dass das Verhältnis von ausgebrachter Masse zu Fläche beider Verteileinheiten im Wesentlichen gleich ist.

Die vorliegende Erfindung wird nachstehend anhand eines in den Zeichnungen dargestellten Ausführungsbeispieles näher erläutert.

Es zeigen:
- Fig. 1: eine schematische Seitenansicht eines Mähdreschers;
- Fig. 2: eine Ansicht von unten auf eine Verteileinheit einer Verteilvorrichtung gemäß Fig. 1;
- Fig. 3: eine Teilansicht auf den Heckbereich des Mähdreschers von oben.

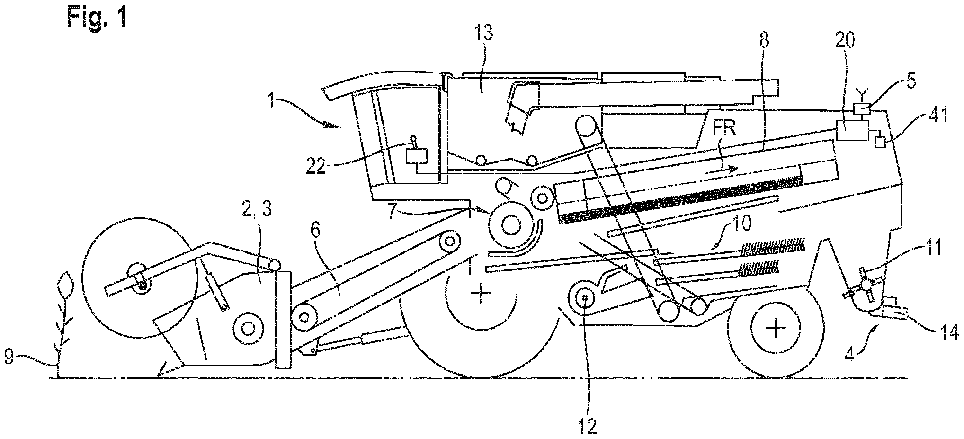

In Fig. 1 ist eine schematische Seitenansicht eines Mähdreschers 1 dargestellt. Der in Fig. 1 schematisch dargestellte Mähdrescher 1 hat als Vorsatzgerät 2 zum Aufnehmen von Erntegut 9 von einer Feldfläche ein Schneidwerk 3, und als Verteileinrichtung 4 an seinem Heck zwei nebeneinander angeordnete Verteileinheiten 14, 15. Eine Verarbeitungsstrecke im Inneren des Mähdreschers 1, die sich von dem Schneidwerk 3 bis zu der Verteileinrichtung 4 erstreckt, umfasst einen Schrägförderer 6, eine Drescheinrichtung 7, eine Abscheidevorrichtung, die im dargestellten Ausführungsbeispiel als zumindest ein Axialabscheider 8 ausgeführt ist, eine Reinigungseinrichtung 10 und eine Häckselvorrichtung 11.

Die Höhe des Schneidwerks 3 ist mit Hilfe von zwei Hydraulikzylindern einstellbar, die unter einer rechten beziehungsweise einer linken Flanke des Schrägförderers 6 angeordnet sind und einerseits am Fahrgestell des Mähdreschers 1, andererseits an ein vorderes Ende des Schrägförderers 6 angelenkt sind. An jeden Hydraulikzylinder ist ein Drucksensor zum Erfassen des Öldrucks in einer Arbeitskammer des Hydraulikzylinders angeschlossen,

Der Axialabscheider 8 empfängt ein Korn-Kurzstrohgemisch, so genannte Nichtkornbestandteile, von der Drescheinrichtung 7 und zerlegt dieses in Stroh, das am Ende des Axialabscheiders 8 austritt und der Häckselvorrichtung 11 zugeführt wird, sowie einen im Wesentlichen Korn- und Ährenbruchstücke enthaltenden Strom, der zur Reinigungseinrichtung 10 gelangt. Nichtkornbestandteile dieses Stroms werden in der Reinigungseinrichtung 10 vom Luftstrom eines Gebläses 12 mitgerissen und gelangen durch die Häckselvorrichtung 11 zur Verteileinrichtung 4, während das von Verunreinigungen befreite Korn in einen Korntank 13 gefördert wird. Eine Steuerungsvorrichtung 40 dient unter anderem der Ansteuerung der Verteileinrichtung 4. Die Steuerungsvorrichtung 40 ist mit einem Navigationssignalempfänger 5, zum Beispiel einem GPS-Empfänger, zur Ermittlung der geographischen Position des Mähdreschers 1 verbunden. Im Heckbereich des Mähdreschers 1 ist etwa auf der Höhe des Axialabscheider 8 eine optische Sensoreinrichtung 41 angeordnet, welche mit der Steuerungsvorrichtung 40 zur Auswertung von Signalen respektive Bilddaten in Verbindung steht. Die Sensoreinrichtung 41 dient der quantitativen Erfassung des von dem zumindest einen Axialabscheider 8 abgegebenen Erntegutmenge sowie der Erfassung der Querverteilung bei der Abgabe an die Verteileinrichtung 4.

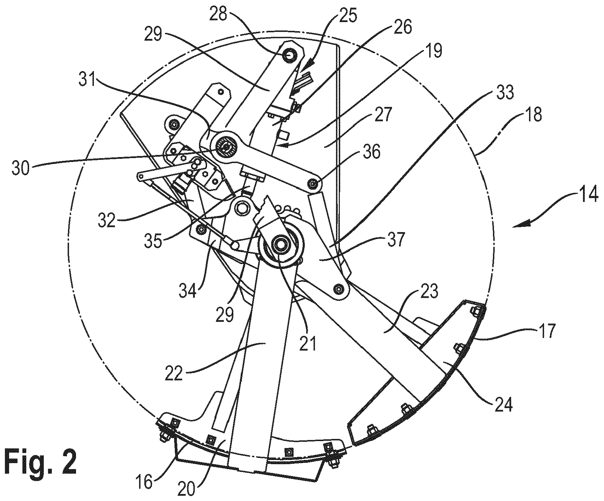

In Fig. 2 ist eine Ansicht auf die Unterseite einer Verteileinheit 14 der eine linke Verteileinheit 14 und eine rechte Verteileinheit 15 umfassenden Verteileinrichtung 4 dargestellt. Die linke und die rechte Verteileinheit 14, 15 sind spiegelbildlich aufgebaut, so dass deren Aufbau nur anhand der einen linken Verteileinheit 14 näher erläutert wird. Die linke Verteileinheit 14 ist jeweils über einen Teil ihres Außenmantels von verstellbaren Streublechen 16 und 17 abgedeckt, wodurch der aus Nichtkornbestandteilen bestehende Gutstrom in den äußeren Bereich der abgeernteten Stoppelfläche lenkbar ist. Die beiden Streubleche 16 und 17 sind verstellbar ausgebildet, so dass durch deren pendelnde Bewegung die durch die Häckselvorrichtung 11 zerkleinerten Nichtkornbestandteile gleichmäßig auf den Stoppeln abgelegt werden kann. Eine gleichmäßige Ablage ist unbedingt erforderlich, damit das Gemisch beim anschließenden Bodenbearbeitungsvorgang gleichmäßig in den Boden eingearbeitet werden kann und somit vermieden wird, dass sich im Boden Strohnester bilden.

In Fig. 2 ist als Beispiel durch einen strichpunktierten Kreis ein Außenmantel 18 der linken Verteileinheit 14 dargestellt. Die nachfolgend beschriebene Anordnung und Verstellung der Streubleche 16 und 17 dieser Verteileinheit 14 erfolgt mittels einer Verstelleinrichtung 19, wobei die Streubleche 16 und 17 sowohl ihre Lage zum Außenmantel 18 als auch zueinander verändern.

In der Figur 2 nehmen die Streubleche 16 und 17 eine Lage ein, in der sie soweit teleskopisch zueinander verstellt sind, dass sie einen maximalen Bereich des Außenmantels 18 umschließen. Außerdem nehmen sie zum Außenmantel 18 eine Lage ein, in der der Gutstrom primär in einen äußeren, also linken Bereich der abgeernteten Stoppelfläche geleitet wird. Demgegenüber können sich die Streubleche 16 und 17 abschnittsweise überlappen, wobei aufgrund deren Lage der Streubereich vergrößert ist. Schließlich können sich die beiden Streubleche 16 und 17 vollständig überdecken, wobei der Streubereich seine größte Breite aufweist. Die entsprechenden Verstellbewegungen werden als zyklische Pendelbewegung mit hoher Geschwindigkeit ausgeführt, um den Gutstrom gleichmäßig zu verteilen.

Jedes der Streubleche 16 und 17 ist gekrümmt ausgebildet und verläuft dabei konzentrisch zum Außenmantel 18. An einer Innenseite des Streublechs 16 befindet sich eine Konsole 20, an der ein auf einer Welle 21 gelagerter Schwenkhebel 22 angreift. In der gleichen Weise ist das Streublech 17 mit einem weiteren Schwenkhebel 23 versehen, der einerseits an deren Konsole 24 und andererseits ebenfalls an der Welle 21 angreift. Damit die beiden Schwenkhebel 22 und 23 unterschiedliche Schwenkbewegungen ausführen können und auch in eine überlappende oder identische Lage bringbar sind, verlaufen sie in axialer Richtung versetzt zueinander auf der Welle 21. Auch die beiden Konsolen 20 und 24 sind derart in axialer Richtung zueinander versetzt, dass sie sich aneinander vorbeibewegen können.

Bestandteil der Verstelleinrichtung 19 ist ein Linearantrieb 25, der als Hydraulikzylinder 26 ausgebildet ist. Eine von einem Rahmenteil des selbstfahrenden Mähdreschers 1 oder des Strohhäckslers 6 ausgehende Traverse 27 nimmt sowohl die Welle 21 als auch ein ortsfestes Schwenklager 28 des Hydraulikzylinders 26 auf. Weiterhin greift sowohl an diesem ortsfesten Schwenklager 28 als an der Welle 21 ein Koppelelement 29 an, das über ein Schwenklager 30 einen zweiarmigen Hebel 31 aufnimmt. An den Enden dieses zweiarmigen Hebels 31 sind Koppelstangen 32 und 33 schwenkbar geführt, von denen die eine Koppelstange 32 schwenkbar mit einem ersten Hebel 34 verbunden ist, an dem eine Kolbenstange 35 des Hydraulikzylinders 26 angreift und der mit dem Schwenkhebel 23 verbunden ist. Die andere Koppelstange 33 ist über ein Gelenk 36 mit einem Ende des zweiarmigen Hebels 31 verbunden und greift an einem zweiten Hebel 37 an, der wiederum mit dem Schwenkhebel 22 verbunden ist. Somit ergibt sich insgesamt eine geometrisch als Parallelogramm ausgebildete Viergelenkkette, über die die beiden Schwenkhebel 22 und 23 und somit die Streubleche 16 und 17 zueinander unterschiedliche Schwenkbewegungen ausführen können, aus denen insgesamt eine teleskopische Umfangsverstellung resultiert.

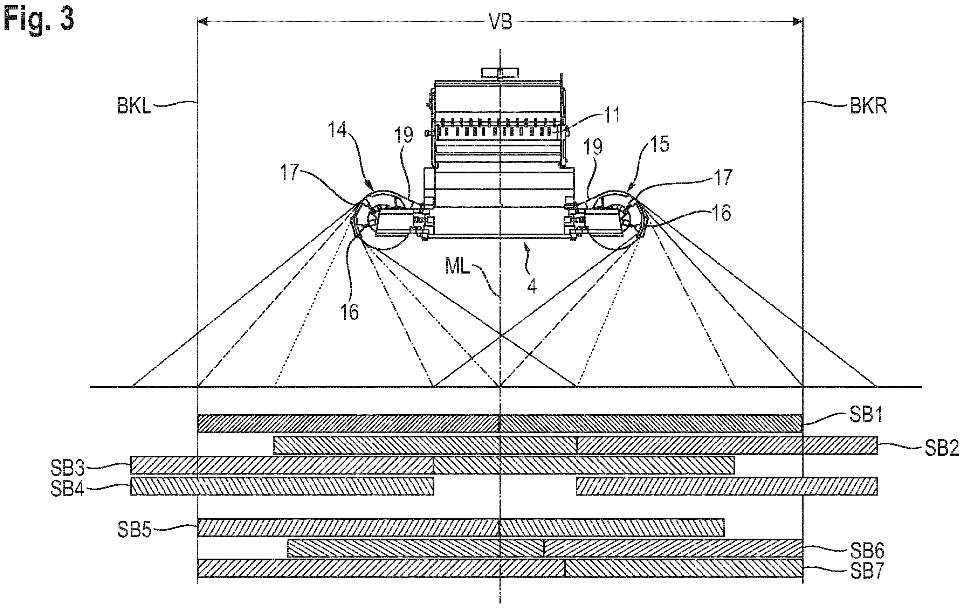

In Fig. 3 ist eine Teilansicht auf den Heckbereich des Mähdreschers 1 von oben dargestellt. Die Ansicht zeigt die Häckselvorrichtung 11, welche den aus Nichtkornbestandteilen bestehenden Erntegutstrom an die Verteileinrichtung 4 übergibt. Wie aus der Darstellung ersichtlich ist, sind die linke und rechte Verteileinheit 14 und 15 der Verteileinrichtung 4 jeweils abschnittsweise in Umfangsrichtung von dem Außenmantel 18 eines Gehäuses 38 umgeben. Die linke Verteileinheit 14 und die rechte Verteileinheit 15 sind zumindest durch die Breite des Mähdreschers 1 zueinander beabstandet angeordnet. Das von der Häckselvorrichtung 11 kommende Erntegut wird mittels, vorzugsweise rotierender, Förderelemente, die Bestandteil der Verteileinrichtung 4 sind, jeweils in Richtung der linken Verteileinheit 14 beziehungsweise der rechten Verteileinheit 15 umgelenkt. Die Gutübergabe zwischen der Häckselvorrichtung 11 und den Förderelementen erfolgt vorzugsweise in einer Ebene, so dass sich ein im Wesentlichen tangentialer Gutübergang einstellt. Die jeweilige Verteileinheit 14 beziehungsweise 15 bringen das Erntegut auf dem Boden aus. Hierzu werden die linke und rechte Verteileinheit 14, 15 von der Steuerungsvorrichtung 40 angesteuert. Für die Ansteuerung sind in der Steuerungsvorrichtung 40 Kennfelder zur Einstellung der Streubleche 16, 17 hinterlegt, welche der Ansteuerung der mittels des Linearantriebes 25 beziehungsweise einer Hebelanordnung verstellbaren Streubleche 16 und 17 dienen. Durch die Steuerungsvorrichtung 40 lassen sich die Drehzahl und Drehrichtung der linken und rechten Verteileinheit 14, 15 variieren.

Weiterhin ist in Fig. 3 eine Arbeitsbreite VB des Vorsatzgerät 2 angedeutet. Diese Arbeitsbreite VB korreliert mit seitlichen Kanten, die beispielsweise rechten und linken Bestandskanten BKR und BKL entsprechen auf einem abzuerntenden Feld entsprechen. Die Arbeitsbreite VB beziehungsweise die Bestandskanten BKR, BKL definieren den im Allgemeinen angestrebten Austragbereich des von der Verteileinrichtung 4 ausgebrachten Gutstroms. Eine strichpunktierte Linie ML repräsentiert die Längsachse des Mähdreschers 1, zu der die linke und rechte Verteileinheit 14, 15 der Verteileinrichtung 4 im Wesentlichen symmetrisch angeordnet sind. Die Darstellung zeigt beispielhaft einige sich aus unterschiedlichen Streukennfeldern zur Ansteuerung der Streubleche 16, 17 der beiden Verteileinheiten 14, 15 ergebenden unterschiedlichen Streubilder, welche unter anderem die möglichen Extrempositionen umfassen. Diese verschiedenen Streubilder sind unterhalb der Darstellung des Heckbereiches des Mähdreschers 1 als unterschiedlich schraffierte Balken SB1, SB2, SB3, SB4, SB5, SB6 dargestellt. Die unterschiedlichen Streubilder sowie der einstellbare Versatz beziehungsweise die Überlappung sind in Bezug auf die Mittellinie ML und die Bestandskanten BKR und BKL dargestellt.

So zeigt der oberste Balken SB1 eine angestrebte gleichmäßige Verteilung innerhalb der Bestandskanten BKR und BKL beziehungsweise entsprechend der Arbeitsreite VB des Vorsatzgerätes 2. Der Balken SB2 zeigt ein Streubild mit einer bezüglich der Mittellinie ML symmetrischen Verschiebung über die, in Fahrtrichtung des Mähdreschers 1 gesehen, rechte Bestandskante BKR hinaus. Die Verschiebung entspricht dabei etwa der halben Breite des Mähdreschers 1. Der Balken SB3 zeigt ein Streubild, welches einer in entgegengesetzter Richtung verschobenen Ausbringung des Gutstromes entspricht. Auch bei diesem Streubild ist eine Verschiebung um etwa die halbe Maschinenbreite des Mähdreschers 1 eingestellt.

Der Balken SB4 zeigt ein nicht erfindungsgemäßes Streubild, welches sich ergibt, wenn beide Verteileinheiten14, 15 derart angesteuert werden, dass im Mittenbereich, das heißt beidseitig zu der Mittellinie ML eine Verschiebung des jeweiligen Verteilbereiches der Verteileinheiten14, 15 über die jeweilige Bestandskante BKR und BKL hinaus erfolgt. Hierbei ergibt sich ein von der Austragung ausgenommener Bereich, der in etwa der Breite des Mähdrehschers 1 entspricht. Dies ist erreichbar, indem auf Grund der zumindest durch die Breite des Mähdreschers 1 zueinander beabstandeten Anordnung der rechten und linken Verteileinheiten 14 und 15 eine sich bis etwa über die halbe Breite des Mähdreschers 1 erstreckende Überlappung der Austragung im Mittenbereich zwischen den Verteileinheiten 14, 15 einstellbar ist. Entsprechend lassen sich die rechte und die linke Verteileinheit 14, 15 derart ansteuern, dass jede jeweils um die halbe Maschinenbreite in Richtung Bestandskante BKR oder BKL verschoben austrägt, die Austragung um etwa die halbe Maschinenbreite verschoben über die rechte und linke Bestandskante BKR, BKL hinaus erfolgt.

Die Balken SB 5 und SB6 zeigen jeweils ein Streubild, welches sich einstellt, wenn die Verschiebung einer der beiden Verteileinheit 14 oder 15 um etwa ein Viertel der Maschinenbreite des Mähdreschers 1 in Richtung der Längsachse ML eingestellt wird. Das Streubild gemäß dem Balken SB 5 zeigt eine Verteilung des durch die linke Verteileinheit 14 ausgebrachten Erntegutes zwischen der linken Bestandskante BKL und der Mittellinie ML, welche der halben Maschinenbreite entspricht. Hingegen ist zwischen der rechten Bestandskante BKR und der Längsachse ML die Verteilung des von der rechten Verteileinheit 15 ausgebrachten Erntegutes um rund ein Viertel der Maschinenbreite in Richtung der Längsachse ML verschoben. Das Streubild SB6 zeigt eine Verschiebung der Verteilung durch die linke Verteileinheit 14, bei welcher die Verteilung um etwa die halbe Maschinenbreite zur linken Bestandskante BKL beabstandet ist und sich teilweise über die Längsachse ML hinaus in Richtung der gegenüberliegenden rechten Bestandskante BKR erstreckt. Die Verteilung der rechten Verteileinheit 15 ist derart eingestellt, dass die Verteilung ausgehend von der rechten Bestandskante BKR bis an den Verteilbereich der linken Verteileinheit 4 angrenzt.

Die quantitative Erfassung der Erntegutmenge und deren Aufteilung bei der Weiterleitung an die Verteileinheiten 14 und 15 der Verteileinrichtung 4 erlaubt eine Anpassung der von den Verteileinheiten 14 und 15 ausgebrachten Erntegutmenge pro Flächeneinheit, nachfolgend als Flächenverhältnis bezeichnet. Mit der Kenntnis von der Massenverteilung der Nichtkornbestandteile auf die linke und die rechte Verteileinheiten 14 und 15 können diese hinsichtlich ihrer Drehzahl und Verteilbreite derart angesteuert werden, dass sich ein gleiches Flächenverhältnis einstellt. Hierzu kann bei ungleichmäßiger Massenverteilung bei der Zuführung der Nichtkornbestandteile zu der jeweiligen Verteileinheit 14, 15 die Verteilbreite, auf Grund der großen Überlappungsmöglichkeit im Mittenbereich, in Abhängigkeit von einem einzuhaltenden Flächenverhältnis angepasst werden. Das heißt, diejenige Verteileinheit 14, 15, der ein größerer Massenstrom an Erntegut Nichtkornbestandteilen zugeführt wird, verteilt über eine größere Verteilbreite hinweg, wie es das Streubild gemäß Balken SB 7 in Fig.3 zeigt. Der linken Verteileinheit 14 wird beispielsweise auf Grund einer Querneigung des Mähdreschers 1 ein größerer Massenstrom mit Nichtkornbestandteilen zugeführt, als der rechten Verteileinheit 15. Demzufolge würde bei einer Vorgabe für ein einzuhaltendes Flächenverhältnis ein Ungleichgewicht bei der Verteilung auftreten. Dadurch, dass ein Versatz der Verteilbreite bezüglich der Längsachse ML des Mähdreschers 1 einstellbar ist, der je Verteileinheit etwa der halben Breite des Mähdreschers 1 entspricht, kann dieses Ungleichgewicht zumindest kompensiert oder vollständig ausgeglichen werden.

**Bezugszeichenliste**

| | | | |
|---|---|---|---|
| **1** | Mähdrescher | **30** | Schwenklager |
| **2** | Vorsatzgerät | **31** | Zweiarmiger Hebel |
| **3** | Schneidewerk | **32** | Koppelstange |
| **4** | Verteileinrichtung | **33** | Koppelstange |
| **5** | Navigationspositionsempfänger | **34** | Ersten Hebel |
| **6** | Schrägförderer | **35** | Kolbenstange |
| **7** | Drescheinrichtung | **36** | Gelenk |
| **8** | Axialabscheider | **37** | Zweiter Hebel |
| **9** | Erntegut | **38** | Gehäuse |
| **10** | Reinigungseinrichtung | | |
| **11** | Häckseleinrichtung | **40** | Steuerungsvorrichtung |
| **12** | Gebläse | **41** | Sensoreinrichtung |
| **13** | Korntank | | |
| **14** | Linke Verteileinheit | **VB** | Arbeitsbreite |
| **15** | Rechte Verteileinheit | **BKR** | Rechte Bestandskante |
| **16** | Streublech | **BKL** | Linke Bestandskante |
| **17** | Streublech | **SB1** | Balken |
| **18** | Außenmantel | **SB2** | Balken |
| **19** | Verstelleinrichtung | **SB3** | Balken |
| **20** | Konsole | **SB4** | Balken |
| **21** | Welle | **SB5** | Balken |
| **22** | Schwenkhebel | **SB6** | Balken |
| **23** | Schwenkhebel | **SB7** | Balken |
| **24** | Konsole | | |
| **25** | Linearantrieb | | |
| **26** | Hydraulikzylinder | | |
| **27** | Traverse | | |
| **28** | Schwenklager | | |
| **29** | Koppelelement | | |

## Patentansprüche

1. Mähdrescher (1) mit einem Vorsatzgerät (2, 3) mit einer Arbeitsbreite (VB) und einer Verteilvorrichtung (4) zur Ausbringung von Nichtkornbestandteilen auf einem Feld, die zumindest zwei rotierend antreibbare Verteileinheiten (14, 15) umfasst, die zueinander beabstandet am Heck des Mähdreschers (1) angeordnet sind, wobei die Verteileinheiten (14, 15) im Wesentlichen symmetrisch zur Längsachse (ML) des Mähdreschers (1) angeordnet sind und jeweils ein die jeweilige Verteileinheit (14, 15) in Umfangsrichtung abschnittsweise umgebendes Gehäuse (19) aufweisen, welches eine Eintrittsöffnung und eine Austrittsöffnung aufweist, sowie jeweils zumindest ein um eine vertikale Achse in Umfangsrichtung der Verteileinheit (14, 15) schwenkbares Streublech (16, 17), welches die Öffnungsweite und die Position der Austrittsöffnung variiert, wobei die Verteileinheiten zumindest durch die Breite des Mähdreschers (1) zueinander beabstandet sind, dass das zumindest eine Leitblech (16, 17) der jeweiligen Verteileinheit (14, 15) mittels einer Steuerungsvorrichtung (40) basierend auf einem Streukennfeld ansteuerbar ist, welches von der Steuerungsvorrichtung (40) in Abhängigkeit von der Arbeitsbreite (VB) eines an den Mähdrescher (1) angekoppelten Vorsatzgerätes (2, 3) und zumindest einem weiteren Parameter generierbar ist, **dadurch gekennzeichnet, dass** ein Versatz der Verteilbreite bezüglich der Längsachse (ML) des Mähdreschers (1) einstellbar ist, der je Verteileinheit (14, 15) etwa der halben Breite des Mähdreschers (1) entspricht, wobei ein vorgebbares Flächenverhältnis, ein Verhältnis von auszubringender Masse an Nichtkornbestandteilen pro Flächeneinheit, welches von der einen Verteileinheit (14, 15) auf Grund eines kleineren zugeführten Massenstromes nicht einhaltbar ist, durch die Verteileinheit (14, 15), der ein größerer Massenstrom zugeführt wird, kompensierbar ist, indem die Verteilbreite bis etwa zur halben Breite des Mähdreschers (1) auf den Verteilbereich der anderen Verteileinheit (14, 15) durch eine entsprechende Ansteuerung ausgedehnt wird, während die Verteilbreite der Verteileinheit (14, 15), der ein kleinerer Massenstrom zugeführt wird, entsprechend reduzierbar ist.

2. Mähdrescher (1) nach Anspruch 1, **dadurch gekennzeichnet, dass** das zumindest eine Streublech (16, 17) der jeweiligen Verteileinheit (14, 15) von dem oder den Streublechen (16, 17) der anderen Verteileinheit (14, 15) unabhängig einstellbar ist.

3. Mähdrescher (1) nach einem der Ansprüche 1 oder 2, **dadurch gekennzeichnet, dass** die Verteilung der von den Verteileinheiten (14, 15) ausgebrachten Nichtkornbestandteile asymmetrisch zur Längsachse (ML) des Mähdreschers (1) einstellbar ist.

4. Mähdrescher nach einem der Ansprüche 1 bis 3, **dadurch gekennzeichnet, dass** die Verteilung der von den Verteileinheiten (14, 15) ausgebrachten Nichtkornbestandteile über die Breite des Vorsatzgerätes (2, 3) hinaus verschiebbar ist.

5. Mähdrescher (1) nach einem der Ansprüche 1 bis 4, **dadurch gekennzeichnet, dass** zur Generierung eines Streukennfeldes durch die Steuerungsvorrichtung (40) Signale eines Positionsbestimmungssystems verarbeitbar sind.

6. Mähdrescher (1) nach einem der Ansprüche 1 bis 5, **dadurch gekennzeichnet, dass** zur Generierung eines Streukennfeldes durch die Steuerungsvorrichtung (40) Signale zumindest eines an dem Mähdrescher (1) angeordneten optischen Sensors (41) verarbeitbar sind.

7. Mähdrescher nach einem der Ansprüche 1 bis 6, **dadurch gekennzeichnet, dass** zur Generierung eines Streukennfeldes durch die Steuerungsvorrichtung (40) Signale zumindest eines den Mähdrescher (1) begleitenden optischen Sensors verarbeitbar sind.

8. Mähdrescher nach einem der Ansprüche 1 bis 7, **dadurch gekennzeichnet, dass** zur Ansteuerung des zumindest einen Streubleches (16, 17) ein als Hydraulikzylinder (19) ausgeführter Aktor vorgesehen ist.

9. Mähdrescher (1) nach Anspruch 8, **dadurch gekennzeichnet, dass** zur Ansteuerung eines zweiten Streubleches (17) eine Hebelanordnung (25) vorgesehen ist, die mit der Aktorik (19) zur Ansteuerung des ersten Streubleches (16) gekoppelt ist.

10. Mähdrescher (1) nach einem der Ansprüche 1 bis 9, **dadurch gekennzeichnet, dass** die Steuerungsvorrichtung (40) dazu eingerichtet ist, anhand von Erntegutparameter und/oder Betriebsparametern des Mähdreschers (1) einen der jeweiligen Verteileinheit (14, 15) zugeführten Massestrom an Nichtkornbestandteilen abzuschätzen.

11. Mähdrescher (1) nach Anspruch 10, **dadurch gekennzeichnet, dass** die Steuerungsvorrichtung (40) dazu eingerichtet ist, die Verteileinheiten (14, 15) in Abhängigkeit von dem abgeschätzten Massenstrom anzusteuern.

12. Verfahren zum Betreiben eines Mähdrescher (1) mit einem Vorsatzgerät (2, 3) mit einer Arbeitsbreite (VB) und einer Verteilvorrichtung (4) zur Ausbringung von Nichtkornbestandteilen auf einem Feld, die zumindest zwei aktiv antreibbare rotierende Verteileinheiten (14, 15) umfasst, die zueinander beabstandet am Heck des Mähdreschers (1) angeordnet sind, wobei die Verteileinheiten (14, 15) im Wesentlichen symmetrisch zur Längsachse (ML) des Mähdreschers (1) angeordnet sind und jeweils ein die jeweilige Verteileinheit (14, 15) in Umfangsrichtung abschnittsweise umgebendes Gehäuse (19) umfassen, welches eine Eintrittsöffnung und eine Austrittsöffnung aufweist, sowie jeweils zumindest ein Streublech (16, 17), das um eine vertikale Achse (21) in Umfangsrichtung der Verteileinheit (14, 15) geschwenkt wird, um die Öffnungsweite der Austrittsöffnung zu variieren, **dadurch gekennzeichnet, dass** das zumindest eine Streublech (16, 17) der jeweiligen zumindest durch die Breite des Mähdreschers (1) zueinander beabstandeten Verteileinheiten (14, 15) mittels einer Steuerungsvorrichtung (40) basierend auf einem Streukennfeld, welches von der Steuerungsvorrichtung (40) in Abhängigkeit von der Arbeitsbreite eines an den Mähdrescher (1) angekoppelten Vorsatzgerätes (2, 3) und zumindest einem weiteren Parameter generiert wird, und einem vorgebbaren Flächenverhältnis, einem Verhältnis von auszubringender Masse an Nichtkornbestandteilen pro Flächeneinheit angesteuert wird, wobei das vorgebbare Flächenverhältnis, welches von der einen Verteileinheit (14, 15) auf Grund eines kleineren zugeführten Massenstromes nicht einhaltbar ist, durch die Verteileinheit (14, 15), der ein größerer Massenstrom zugeführt wird, kompensiert wird, indem die Verteilbreite bis etwa zur halben Breite des Mähdreschers (1) auf den Verteilbereich der anderen Verteileinheit (14, 15) durch eine entsprechende Ansteuerung ausgedehnt wird, während die Verteilbreite der Verteileinheit (14, 15), der ein kleinerer Massenstrom zugeführt wird, entsprechend reduziert wird.

13. Verfahren nach Anspruch 12, **dadurch gekennzeichnet, dass** die der jeweiligen Verteileinheit (14, 15) zugeführte Masse an Nichtkornbestandteilen bestimmt wird.

14. Verfahren nach einem der Ansprüche 12 oder 13, **dadurch gekennzeichnet, dass** die jeweilige Verteileinheit (14, 15) derart von der Steuerungsvorrichtung (40) angesteuert wird, dass das Verhältnis von ausgebrachter Masse zu Fläche auf dem Boden im Bereich der Verteilbreite der jeweiligen Verteileinheit (14, 15) im Wesentlichen gleich ist.

## Claims

1. A combine harvester (1) with a front attachment (2, 3) having a working width (VB) and a spreader device (4) for spreading non-grain constituents on a field, which comprises at least two rotatably drivable spreader units (14, 15) which are disposed at a distance with respect to each other at the rear of the combine harvester (1), wherein the spreader units (14, 15) are disposed essentially symmetrically with respect to the longitudinal axis (ML) of the combine harvester (1) and each comprises a housing (19) which partially surrounds the respective spreader unit (14, 15) in the circumferential direction and which comprises an inlet opening and a discharge opening, as well as respectively at least one deflector (16, 17) which is pivotable about a vertical axis in the circumferential direction of the spreader unit (14, 15), which varies the opening width and the position of the discharge opening, wherein the spreader units are separated from each other by at least the width of the combine harvester (1), wherein the at least one deflector (16, 17) of the respective spreader unit (14, 15) can be controlled by means of a control device (40) on the basis of a spreading performance characteristic which can be generated by the control device (40) as a function of the working width (VB) of a front attachment (2, 3) coupled to the combine harvester (1) and at least one further parameter, **characterized in that** an offset of the spread width with respect to the longitudinal axis (ML) of the combine harvester (1) can be set which, per spreader unit (14, 15) corresponds to approximately half the width of the combine harvester (1), wherein a presettable area ratio, namely a ratio of mass of non-grain constituents to be spread per unit area, which cannot be maintained from one spreader unit (14, 15) because a lower mass flow is being supplied, can be compensated for by the spreader unit (14, 15) to which a higher mass flow is being supplied, by extending the spread width by up to approximately half the width of the combine harvester (1) onto the spread zone for the other spreader unit (14, 15) by corresponding control, while the spread width of the spreader unit (14, 15) to which a lower mass flow is supplied can be correspondingly reduced.

2. The combine harvester (1) as claimed in claim 1, **characterized in that** the at least one deflector (16, 17) of the respective spreader unit (14, 15) is adjustable independently of the deflector or deflectors (16, 17) of the other spreader unit (14, 15).

3. The combine harvester (1) as claimed in claim 1 or claim 2, **characterized in that** spreading of the non-grain constituents which are spread from the spreader units (14, 15) can be adjusted asymmetrically with respect to the longitudinal axis (ML) of the combine harvester (1).

4. The combine harvester (1) as claimed in one of claims 1 to 3, **characterized in that** spreading of the non-grain constituents which are spread from the spreader units (14, 15) can be displaced beyond the width of the front attachment (2, 3).

5. The combine harvester (1) as claimed in one of claims 1 to 4 **characterized in that**, in order to generate a spreader performance characteristic, signals from a positioning system can be processed by the control device (40).

6. The combine harvester (1) as claimed in one of claims 1 to 5 **characterized in that**, in order to generate a spreader performance characteristic, signals from at least one optical sensor (41) disposed on the combine harvester (1) can be processed by the control device (40).

7. The combine harvester (1) as claimed in one of claims 1 to 6 **characterized in that**, in order to generate a spreader performance characteristic, signals from at least one optical sensor accompanying the combine harvester (1) can be processed by the control device (40).

8. The combine harvester (1) as claimed in one of claims 1 to 7 **characterized in that**, in order to control the at least one deflector (16, 17), an actuator that is in the form of a hydraulic cylinder (19) is provided.

9. The combine harvester (1) as claimed in claim 8, **characterized in that** a lever assembly (25) is provided in order to control a second deflector (17) and which is coupled to the actuator assembly (19) in order to control the first deflector (16).

10. The combine harvester (1) as claimed in one of claims 1 to 9, **characterized in that** the control device (40) is configured so as to be able to estimate the mass flow of non-grain constituents supplied to the respective spreader unit (14, 15) with the aid of harvest parameters and/or operational parameters of the combine harvester (1).

11. The combine harvester (1) as claimed in claim 10, **characterized in that** the control device (40) is configured so as to be able to control the spreader units (14, 15) as a function of the estimated mass flow.

12. A method for operating combine harvester (1) with a front attachment (2, 3) having a working width (VB) and a spreader device (4) for spreading non-grain constituents on a field, which comprises at least two actively operable rotary spreader units (14, 15) which are disposed at a distance with respect to each other at the rear of the combine harvester (1), wherein the spreader units (14, 15) are disposed essentially symmetrically with respect to the longitudinal axis (ML) of the combine harvester (1) and each comprises a housing (19) which partially surrounds the respective spreader unit (14, 15) in the circumferential direction and which comprises an inlet opening and a discharge opening, as well as respectively at least one deflector (16, 17) which is pivoted about a vertical axis (21) in the circumferential direction of the spreader unit (14, 15), in order to vary the opening width of the discharge opening, **characterized in that** the at least one deflector (16, 17) of the respective spreader units (14, 15), which are separated from each other by at least the width of the combine harvester (1), is controlled by means of a control device (40) based on a spreader performance characteristic which is generated by the control device (40) as a function of the working width of a front attachment (2, 3) coupled to the combine harvester (1) and at least one further parameter, and on a presettable area ratio, namely a ratio of the mass of non-grain constituents to be spread per unit area, wherein the presettable area ratio which cannot be maintained by one spreader unit (14, 15) because the mass flow from one spreader unit (14, 15) is lower is compensated for by the spreader unit (14, 15) to which a higher mass flow is supplied by extending the spread width by up to approximately half the width of the combine harvester (1) onto the spread zone for the other spreader unit (14, 15) by corresponding control, while the spread width of the spreader unit (14, 15) to which a lower mass flow is supplied is correspondingly reduced.

13. The method as claimed in claim 12, **characterized in that** the mass of non-grain constituents supplied to the respective spreader unit (14, 15) is determined.

14. The method as claimed in claim 12 or claim 13, **characterized in that** the respective spreader unit (14, 15) is controlled by the control device (40) in a manner such that the ratio of mass which is spread to the area on the ground in the region of the spread width of the respective spreader unit (14, 15) is essentially identical.

## Revendications

1. Moissonneuse-batteuse (1) comprenant un outil frontal (2, 3) avec une largeur de travail (VB) et un dispositif d'épandage (4) pour évacuer des composants non-grains sur un champ, lequel comprend au moins deux unités d'épandage (14, 15) entraînables en rotation qui sont disposées à distance l'une de l'autre à l'arrière de la moissonneuse-batteuse (1), les unités d'épandage (14, 15) étant disposées sensiblement symétriquement par rapport à l'axe longitudinal (ML) de la moissonneuse-batteuse (1) et comprenant chacune un carter (19) qui entoure par portions l'unité d'épandage correspondante (14, 15) dans la direction circonférentielle et qui comporte une ouverture d'entrée et une ouverture de sortie ainsi qu'une tôle d'éparpillage (16, 17) qui peut pivoter autour d'un axe vertical da ns la direction circonférentielle de l'unité d'épandage (14, 15) et qui fait varier la largeur d'ouverture et la position de l'ouverture de sortie, les unités d'épandage étant distantes l'une de l'autre au moins de la largeur de la moissonneuse-batteuse (1), en ce que la au moins une tôle déflectrice (16, 17) de chaque unité d'épandage (14, 15) est commandable au moyen d'un dispositif de commande (40) sur la base d'un diagramme caractéristique d'éparpillage qui peut être généré par le dispositif de commande (40) en fonction de la largeur de travail (VB) d'un outil frontal (2, 3) couplé à la moissonneuse-batteuse (1) et d'au moins un autre paramètre, **caractérisée en ce qu'**il est possible d'instaurer un décalage de la largeur d'épandage par rapport à l'axe longitudinal (ML) de la moissonneuse-batteuse (1), lequel correspond par unité d'épandage (14, 15) sensiblement à la moitié de la largeur de la moissonneuse-batteuse (1), un rapport de surface prescriptible, un rapport de la masse de composants non-grains à évacuer par unité de surface, qui ne peut pas être supporté par l'une des unités d'épandage (14, 15) en raison d'un flux massique amené inférieur, étant compensable par l'unité d'épandage (14, 15) à laquelle est amené un flux massique supérieur, par le fait que la largeur d'épandage est étendue jusqu'à environ la moitié de la largeur de la moissonneuse-batteuse (1) à la zone d'épandage de l'autre unité d'épandage (14, 15) par l'intermédiaire d'une commande correspondante, tandis que la largeur d'épandage de l'unité d'épandage (14, 15) à laquelle est amené un flux massique inférieur est réduite en conséquence.

2. Moissonneuse-batteuse (1) selon la revendication 1, **caractérisée en ce que** la au moins une tôle d'éparpillage (16, 17) d'une unité d'épandage (14, 15) respective est réglable indépendamment de la ou des tôles d'éparpillage (16, 17) de l'autre unité d'épandage (14, 15).

3. Moissonneuse-batteuse (1) selon une des revendications 1 ou 2, **caractérisée en ce que** l'épandage des composants non-grains évacués par les unités d'épandage (14, 15) est réglable de manière asymétrique par rapport à l'axe longitudinal (ML) de la moissonneuse-batteuse (1) .

4. Moissonneuse-batteuse selon une des revendications 1 à 3, **caractérisée en ce que** l'épandage des composants non-grains évacués par les unités d'épandage (14, 15) est déplaçable sur la largeur de l'outil frontal (2, 3).

5. Moissonneuse-batteuse (1) selon une des revendications 1 à 4, **caractérisée en ce que** des signaux d'un système de détermination de position peuvent être traités en vue de la génération d'un diagramme caractéristique d'éparpillage par l'intermédiaire du dispositif de commande (40).

6. Moissonneuse-batteuse (1) selon une des revendications 1 à 5, **caractérisée en ce que** des signaux d'au moins un capteur optique (41) disposé sur la moissonneuse-batteuse (1) peuvent être traités en vue de la génération d'un diagramme caractéristique d'éparpillage par l'intermédiaire du dispositif de commande (40).

7. Moissonneuse-batteuse selon une des revendications 1 à 6, **caractérisée en ce que** des signaux d'au moins un capteur optique accompagnant la moissonneuse-batteuse (1) peuvent être traités en vue de la génération d'un diagramme caractéristique d'éparpillage par l'intermédiaire du dispositif de commande (40).

8. Moissonneuse-batteuse selon une des revendications 1 à 7, **caractérisée en ce qu'**un actionneur conformé en vérin hydraulique (19) est prévu pour commander la au moins une tôle d'éparpillage (16, 17).

9. Moissonneuse-batteuse (1) selon la revendication 8, **caractérisée en ce que**, pour commander une seconde tôle d'éparpillage (17) est prévu un agencement de levier (25) qui est couplé à l'ensemble actionneur (19) pour commander la première tôle d'éparpillage (16).

10. Moissonneuse-batteuse (1) selon une des revendications 1 à 9, **caractérisée en ce que** le dispositif de commande (40) est agencé pour estimer un flux massique de composants non-grains amené à chaque unité d'épandage (14, 15) à l'aide de paramètres de produit de récolte et/ou de paramètres d'exploitation de la moissonneuse-batteuse (1).

11. Moissonneuse-batteuse (1) selon la revendication 10, **caractérisée en ce que** le dispositif de commande (40) est agencé pour commander les unités d'épandage (14, 15) en fonction du flux massique estimé.

12. Procédé d'exploitation d'une moissonneuse-batteuse (1) comprenant un outil frontal (2, 3) avec une largeur de travail (VB) et un dispositif d'épandage (4) pour évacuer des composants non-grains sur un champ, lequel comprend au moins deux unités d'épandage (14, 15) activement entraînables en rotation qui sont disposées à distance l'une de l'autre à l'arrière de la moissonneuse-batteuse (1), les unités d'épandage (14, 15) étant disposées sensiblement symétriquement par rapport à l'axe longitudinal (ML) de la moissonneuse-batteuse (1) et comprenant chacune un carter (19) qui entoure par portions l'unité d'épandage correspondante (14, 15) dans la direction circonférentielle et qui comporte une ouverture d'entrée et une ouverture de sortie ainsi qu'une tôle d'éparpillage (16, 17) qui peut pivoter autour d'un axe vertical (21) dans la direction circonférentielle de l'unité d'épandage (14, 15) pour faire varier la largeur d'ouverture de l'ouverture de sortie, **caractérisé en ce que** la au moins une tôle d'éparpillage (16, 17) des unités d'épandage (14, 15) respectives distantes l'une de l'autre d'au moins la largeur de la moissonneuse-batteuse (1) est commandée au moyen d'un dispositif de commande (40) sur la base d'un diagramme caractéristique d'éparpillage qui est généré par le dispositif de commande (40) en fonction de la largeur de travail d'un outil frontal (2, 3) couplé à la moissonneuse-batteuse (1) et d'au moins un autre paramètre, et d'un rapport de surface prescriptible, un rapport de la masse de composants non-grains à évacuer par unité de surface, le rapport de surface prescriptible qui ne peut pas être supporté par l'une des unités d'épandage (14, 15) en raison d'un flux massique amené inférieur étant compensé par l'unité d'épandage (14, 15) à laquelle est amené un flux massique supérieur, par le fait que la largeur d'épandage est étendue jusqu'à environ la moitié de la largeur de la moissonneuse-batteuse (1) à la zone d'épandage de l'autre unité d'épandage (14, 15) par l'intermédiaire d'une commande correspondante, tandis que la largeur d'épandage de l'unité d'épandage (14, 15) à laquelle est amené un flux massique inférieur est réduite en conséquence.

13. Procédé selon la revendication 12, **caractérisé en ce que** la masse de composants non-grains amenée à l'unité d'épandage (14, 15) respective est déterminée.

14. Procédé selon une des revendications 12 ou 13, **caractérisé en ce que** l'unité d'épandage (14, 15) respective est commandée par le dispositif de commande (40), de façon que le rapport de la masse évacuée à la surface sur le sol dans la zone de la largeur d'épandage de l'unité d'épandage (14, 15) respective soit sensiblement égal.
